(19) Europäisches Patentamt / European Patent Office / Office européen des brevets

(11) **EP 2 823 179 B1**

(12) **FASCICULE DE BREVET EUROPEEN**

(45) Date de publication et mention
de la délivrance du brevet:
**30.05.2018 Bulletin 2018/22**

(21) Numéro de dépôt: **13712866.6**

(22) Date de dépôt: **28.02.2013**

(51) Int Cl.:
*F02N 11/08* (2006.01)    *H02P 1/04* (2006.01)

(86) Numéro de dépôt international:
**PCT/FR2013/050411**

(87) Numéro de publication internationale:
**WO 2013/132173 (12.09.2013 Gazette 2013/37)**

(54) **PROCEDE DE LIMITATION D'UN COURANT D'APPEL DANS UN CIRCUIT ELECTRIQUE DE PUISSANCE D'UN DEMARREUR DE VEHICULE AUTOMOBILE, CIRCUIT ELECTRIQUE, LIMITEUR DE COURANT ET DEMARREUR CORRESPONDANTS**

VERFAHREN ZUR BEGRENZUNG EINES ZUSTROMS IN EINER STROMSCHALTUNG EINES KRAFTFAHRZEUG-ANLASSERS SOWIE ENTSPRECHENDE ELEKTRISCHE SCHALTUNG, STROMBEGRENZER UND ANLASSER

METHOD FOR LIMITING AN INRUSH CURRENT IN AN ELECTRICAL POWER CIRCUIT OF A MOTOR VEHICLE STARTER, AND CORRESPONDING ELECTRICAL CIRCUIT, CURRENT LIMITER AND STARTER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.03.2012 FR 1252015**

(43) Date de publication de la demande:
**14.01.2015 Bulletin 2015/03**

(73) Titulaire: **Valeo Equipements Electriques Moteur 94046 Créteil Cedex (FR)**

(72) Inventeur: **LABBE, Nicolas F-69003 Lyon (FR)**

(56) Documents cités:
**EP-A1- 2 233 732     EP-A2- 2 080 897
US-A- 1 179 407     US-A1- 2002 023 605**

EP 2 823 179 B1

**Description**

**DOMAINE TECHNIQUE DE L'INVENTION.**

De manière générale, l'invention concerne le domaine des démarreurs de moteur thermique dans les véhicules automobiles. Plus particulièrement, l'invention concerne un procédé de limitation d'un courant d'appel dans un circuit électrique de puissance d'un démarreur, ainsi que le circuit électrique correspondant. Elle concerne aussi un limiteur de courant apte à être inséré dans ce circuit électrique et un démarreur comprenant un tel limiteur de courant. Un exemple de l'état de la technique est décrit dans le document US2002/0023605 A1.

**ARRIERE PLAN TECHNOLOGIQUE DE L'INVENTION.**

Lors de la mise sous tension d'un démarreur pour assurer le démarrage du moteur thermique du véhicule, il se produit un courant d'appel important qui est proche du niveau de courant de court-circuit du démarreur, à savoir, un courant de l'ordre de 1000 Ampères. Ce courant décroît ensuite en intensité à mesure que l'induit du démarreur, correspondant au rotor de la machine, monte en vitesse.

A ce pic initial de courant correspond une chute conséquente de la tension aux bornes de la batterie. D'autres chutes de tension moins importantes se produisent ensuite pendant la phase de démarrage et correspondent à des passages par des points morts hauts successifs du moteur thermique.

Le développement de démarreurs dits « renforcés » adaptés pour des systèmes d'arrêt/ relance automatique du moteur thermique (systèmes dits « Stop/Start » ou « Stop & Go » en terminologie anglaise) imposent aujourd'hui de nouvelles contraintes aux équipementiers automobiles, relatives au respect de seuils de tension minima de la batterie lors de l'appel de courant à la mise sous tension du démarreur. Ainsi, dans leurs cahiers de charges, les constructeurs automobiles définissent un premier seuil de tension compris habituellement entre 7 et 9 Volt en dessous duquel ne doit pas descendre la tension de batterie. Pour les chutes de tension suivantes, correspondant aux points morts hauts du moteur thermique, la tension de batterie doit rester supérieure à un second seuil de tension compris habituellement entre 8 et 9 Volt. Pendant le démarrage du moteur thermique, la tension du réseau de bord du véhicule reste ainsi à une valeur suffisante pour garantir le fonctionnement attendu des équipements des véhicules.

Les démarreurs renforcés ont généralement une puissance supérieure aux démarreurs classiques de manière à obtenir un démarrage rapide pour davantage de confort des utilisateurs. Il en découle un courant d'appel à la mise sous tension plus élevé et donc une première chute de la tension de batterie qui va au-delà des valeurs habituelles et cela en regard d'exigences élevées. Cela entraîne une réelle difficulté pour le concepteur car il faudrait pour se situer au-dessus en tension de batterie que le démarreur possède des chutes de tension interne si élevées qu'il n'aurait plus alors la puissance nécessaire pour entraîner à vitesse suffisante le moteur thermique à basse température.

Dans la technique antérieure, des solutions ont été proposées au problème exposé ci-dessus. Une première solution connue de l'entité inventive repose sur l'utilisation de convertisseurs électroniques élévateurs de tension afin d'éviter un niveau de tension trop bas sur le réseau de bord. Un inconvénient majeur de ces convertisseurs réside dans les coûts substantiels qu'ils introduisent.

Une autre solution connue propose de commander le démarreur au moyen de deux relais, une temporisation et une résistance de limitation de courant. Dans une première phase de fonctionnement dont la durée est déterminée par la temporisation, une résistance additionnelle est insérée en série dans le circuit électrique de puissance du démarreur et limite le pic de courant initial. Dans une seconde phase de fonctionnement, la résistance additionnelle est sortie du circuit de puissance afin de permettre le passage d'un courant suffisant dans l'induit du démarreur et d'autoriser une montée en vitesse de celui-ci.

Les documents EP2080897A2 et EP2128426A2 décrivent un démarreur du type ci-dessus. Outre l'inconvénient du coût additionnel qu'implique le relais de commande supplémentaire, la temporisation et la résistance de limitation de courant, l'introduction de ce relais supplémentaire, qui comporte des pièces mécaniques mobiles soumises à usure, a un impact négatif sur la tenue du démarreur en termes de nombre de cycles de démarrage que doit pouvoir supporter sans encombre le démarreur. La tenue du démarreur en nombre de cycles de démarrage est une contrainte particulièrement sévère pour les démarreurs destinés à des systèmes Stop/ Start. En effet, il est demandé à de tels démarreurs de tenir environ 300 000 cycles de démarrage, soit dix fois plus que les 30 000 cycles environ demandés aux démarreurs classiques.

Outre les inconvénients exposés ci-dessus, l'utilisation de cette seconde solution de la technique antérieure peut s'avérer inadaptée lorsque la satisfaction à un gabarit de tension contraignant en termes de temps est demandée par le constructeur automobile. Un tel gabarit comporte généralement un palier bas de tension correspondant au premier seuil de tension indiqué ci-dessus et un palier haut de tension correspondant au second seuil de tension. Une rampe de tension montante est également prévue dans le gabarit entre le palier bas et le palier haut.

Les essais réalisés par l'entité inventive, avec les valeurs usuelles des constructeurs pour la durée du palier bas et la pente de la rampe du gabarit, montrent la difficulté qu'il y a avec cette seconde solution de la technique antérieure de rester dans le gabarit. En effet, il a été constaté un risque de franchissement du gabarit au niveau de sa rampe de tension lorsque la tension de batterie, après s'être redressée une fois le pic initial de courant absorbé, chute à nouveau à la fin de la temporisation, le courant traversant l'induit du démarreur augmentant alors sensiblement du fait la sortie de la résistance de limitation de courant du circuit électrique de puissance. Après ce franchissement, la tension de batterie peut rester sous le gabarit pendant une certaine durée et ne revenir au-dessus du gabarit qu'après la fin de la rampe de tension montante, alors que l'instant de début du palier haut de tension a déjà été atteint.

Il a été également proposé d'insérer en série dans le circuit électrique de puissance du démarreur une bobine d'arrêt (également dite « de choc ») comme élément limiteur de courant au lieu d'une résistance, ou encore de connecter un condensateur en parallèle sur le démarreur.

Ces deux dernières solutions sont mises en oeuvre, alternativement ou en combinaison, dans les circuits électriques de démarreur décrits dans le document US6598574B2.

Le but de cette bobine de choc ou de ce condensateur est de limiter une vitesse de variation du courant dans le circuit.

L'effet de ces éléments dans un circuit électrique est bien connu de l'électricien, et ils ont été utilisés de longue date dans ce but dans de nombreux domaines, y compris celui du véhicule automobile comme le montre le document US1179407.

Un inconvénient de cette solution est que la vitesse de variation du courant dépend d'une résistance totale du circuit, et pas seulement d'une inductance additionnelle ou d'une capacité. Il est donc difficile de réaliser un gabarit précis correspondant à des spécifications des constructeurs automobiles.

De plus, l'énergie électromagnétique accumulée dans la bobine de choc sera restituée au moment de l'ouverture du circuit en s'ajoutant à celle stockée dans les enroulements du moteur électrique, ce qui provoquera une surtension.

Dans le but de supprimer les inconvénients indiqués ci-dessus, l'entité inventive a déjà proposé des perfectionnements aux démarreurs existants de la technique antérieure, notamment pour les applications dans des véhicules automobiles de la fonction d'arrêt/ relance automatique du moteur thermique.

Ces perfectionnements ont consisté, de manière générale, à monter un dispositif de filtrage de type inductif en série avec le moteur électrique dans le circuit électrique de puissance du démarreur, de façon à limiter le courant d'appel et à empêcher une chute de la tension de batterie consécutive à la mise en service du moteur électrique.

De nouvelles études théoriques menées par l'entité inventive ont permis de préciser le champ de ces perfectionnements.

## DESCRIPTION GENERALE DE L'INVENTION.

La présente invention vise donc un procédé de limitation d'un courant d'appel dans un circuit électrique de puissance d'un démarreur de véhicule automobile.

Selon un premier aspect, le procédé de limitation d'un courant d'appel dans un circuit électrique de puissance d'un démarreur de véhicule automobile, le démarreur comprenant un contacteur électromagnétique et un moteur électrique comportant des enroulements moteurs présentant une inductance nominale, est du type de ceux consistant à contrôler la vitesse de variation du courant d'appel au moyen d'un élément inductif inséré en série dans le circuit.

Conformément à l'invention, une valeur initiale de la vitesse de variation est sensiblement indépendante de l'inductance nominale, et la valeur initiale est fonction d'un coefficient de couplage voisin de un entre un enroulement primaire et un enroulement secondaire d'un transformateur dont l'enroulement primaire constitue l'élément inductif.

Cette valeur initiale est aussi fonction d'un coefficient de couplage entre un enroulement primaire et un enroulement secondaire d'un transformateur dont l'enroulement primaire constitue l'élément inductif du circuit.

On tire également bénéfice du fait que cette valeur initiale est inversement proportionnelle à un coefficient de dispersion de ce transformateur.

Dans le procédé selon l'invention, une limitation du courant d'appel est avantageusement fonction d'une résistance secondaire de l'enroulement secondaire du transformateur.

Ce procédé est avantageusement mis en oeuvre dans un circuit électrique de puissance d'un démarreur d'un véhicule automobile, du type de ceux comprenant en série un élément inductif, et dont le démarreur comprend un moteur électrique et un contacteur électromagnétique.

Selon l'invention, le circuit électrique de puissance est remarquable en ce que cet élément inductif est constitué d'un enroulement primaire d'un transformateur dont un enroulement secondaire est court-circuité.

Dans un premier mode de réalisation de ce circuit électrique de puissance, l'enroulement primaire est inséré préférentiellement entre une borne positive d'une batterie du véhicule et un contact de puissance du contacteur électromagnétique.

Dans un second mode de réalisation, l'enroulement primaire est alternativement inséré de préférence entre un contact de puissance du contacteur électromagnétique et le moteur électrique.

Un limiteur de courant apte à être intégré dans un circuit électrique de puissance d'un démarreur d'un véhicule automobile selon l'invention est remarquable en ce qu'il est constitué d'un transformateur présentant un coefficient de dispersion prédéterminé en fonction d'un gabarit de tension d'un réseau électrique de bord de ce véhicule.

En outre, ce transformateur comporte un enroulement secondaire présentant avantageusement, alternativement ou simultanément, une résistance secondaire prédéterminée en fonction de ce gabarit de tension.

L'invention concerne aussi un démarreur de véhicule automobile remarquable en ce qu'il comporte un limiteur de courant présentant les caractéristiques ci-dessus, ce limiteur de courant étant fixé sur un carter extérieur du démarreur.

Ces quelques spécifications essentielles auront rendu évidents pour l'homme de métier les avantages supplémentaires obtenus en prenant en compte les résultats des études théoriques menées par la société demanderesse autour de son dispositif de filtrage de type inductif.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

## BREVE DESCRIPTION DES DESSINS.

La **Figure 1** est un schéma de principe simplifié connu de l'état de la technique d'un circuit électrique de puissance d'un démarreur de véhicule automobile comprenant une bobine de'arrêt.

Les **Figures 2a et 2b** montrent l'évolution temporelle d'un courant d'appel dans des circuits électriques de puissance de démarreurs de véhicules automobiles connus de l'état de la technique, respectivement moteur électrique bloqué et moteur électrique en libre rotation.

La **Figure 3** est un schéma de principe simplifié d'un circuit électrique de puissance d'un démarreur de véhicule automobile comprenant un élément inductif selon l'invention.

Les **Figures 4a et 4b** montrent l'évolution temporelle d'un courant d'appel dans des circuits électriques de puissance de démarreurs de véhicules automobiles comprenant un élément inductif selon l'invention, respectivement moteur électrique bloqué et moteur électrique en libre rotation, par comparaison à un circuit sans élément inductif additionnel.

Les **Figures 5a et 5b** sont des représentations schématiques d'un circuit électrique de puissance d'un démarreur de véhicule automobile et de sa commande selon deux modes de réalisation préférés de l'invention.

## DESCRIPTION DES MODES DE REALISATION PREFERES DE L'INVENTION.

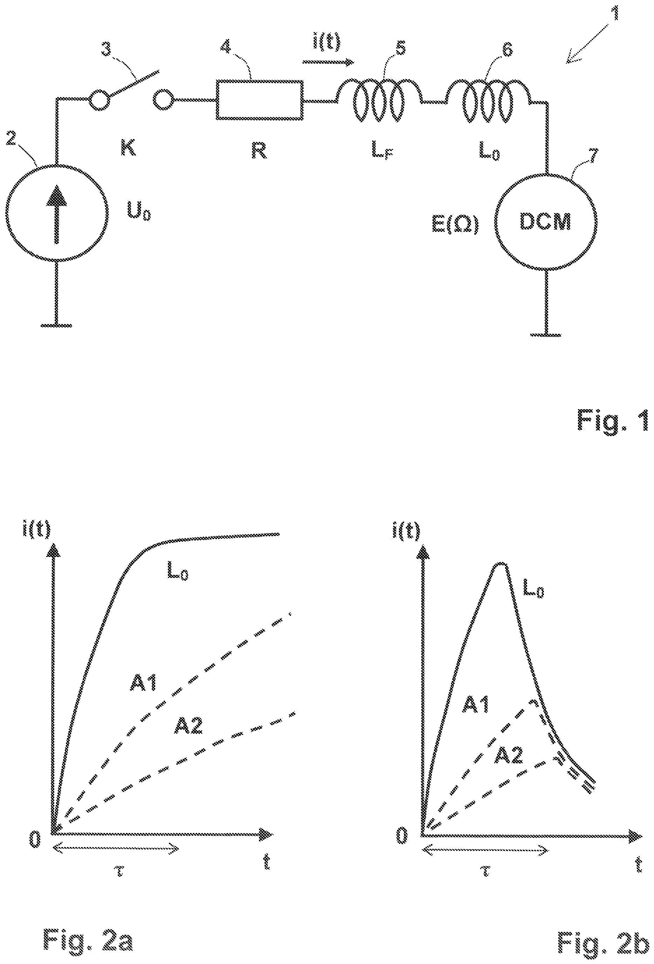

Les différents éléments composant un circuit électrique de puissance 1 d'un démarreur de véhicule automobile connu de l'état de la technique ont été représentés schématiquement sur la **Figure 1** par:

- une source de tension continue 2 ayant une tension nominale $U_0$ représentant la batterie de bord;
- un interrupteur 3 représentant un contacteur électromagnétique;
- un élément résistif 4 représentant toutes les résistances du circuit présentant une résistance équivalente R;
- une bobine de choc 5 présentant une inductance de filtrage $L_F$;
- une self 6 représentant tous les enroulements du moteur 7 et présentant une inductance nominale $L_0$;
- un moteur à courant continu 7 présentant une fém de rotation $E(\Omega)$ dépendant d'une vitesse de rotation $\Omega$.

Une intensité instantanée du courant circulant dans le circuit est notée i(t) et une tension instantanée aux bornes de l'élément résistif 4, de la bobine de choc 5 et des enroulements moteurs 6 en série est notée U(t).

Aux fins d'une première l'analyse électrique précise de ce circuit réalisée par l'entité inventive, une somme de l'inductance nominale $L_0$ et de l'inductance de filtrage $L_F$ est notée L.

Une constante de fém est notée $K_E$, une constante de couple est notée $K_C$, un moment d'inertie des pièces en rotation est noté J, un couple moteur est noté C, un flux inducteur est noté $\Phi$.

Cette première analyse électrique est résumée ci-dessous:

$$(1)\ U = L.di/dt + R.i,\ \text{avec}\ i = 0\ \text{à}\ t = 0$$

(loi d'Ohm généralisée appliquée à tout le circuit)

$$(2) \qquad i(t) = U_0/R \, . \, (1 - \exp(-R.t/L))$$

(solution de l'équation différentielle (1) sans fém de rotation $E(\Omega)$, le rotor étant bloqué, avec $U = U_0$)

$$(3) \qquad i(t) = U/R \, . \, (1 - \exp(-R.t/L))$$

(solution approchée de (1) avec fém de rotation $E(\Omega)$, à rotor libre de tourner, avec $U = U_0 - E(\Omega)$, $E(\Omega) = K_E.\Phi.\,\Omega$, et $J.d\,\Omega\,/dt = C(i) = K_C.\,\Phi.i$, d'où $\Omega = K_C.\Phi.i.t/J$)

$$(4) \qquad \tau = L/R, \ di/dt = U_0/L \text{ à } t = 0, \ et \ \ i \rightarrow U_0/R \text{ quand } t \rightarrow \infty$$

(extensions de (2) et de (1) sans fém de rotation $E(\Omega)$: constante de temps électrique nominale $\tau$, pente du signal $i(t)$ à l'origine, et niveau asymptotique de $i$)

$$(5) \qquad \tau = L/R, \ di/dt = U_0/L \text{ à } t = 0, \ et \ \ di/dt = 0 \ (i = i_{max}) \text{ pour } \ U_0 - E(\Omega) = R.i$$

(extensions de (3) et de (1) avec fém de rotation : constante de temps électrique nominale $\tau$, pente du signal $i(t)$ à l'origine, et condition d'atteinte du niveau maximal de $i$)

$$(6) \qquad W_{mag} = 1/2. \, L_F. \, i^2 + 1/2 \, . \, i. \, \Phi = 1/2 \, .L.i^2$$

(L'énergie $W_{mag}$ emmagasinée sous forme magnétique dans les cas (1) et (2) sera restituée à l'ouverture du circuit, ce qui provoquera une surtension d'amplitude proportionnelle à L)

Des solutions (2) de l'équation différentielle (1) correspondant au cas du rotor bloqué sont représentées sur la **Figure 2a** quand une valeur de L passe de $L_0$ (pas de bobine de choc 5 dans le circuit 1, à une valeur cinq fois supérieure A1, ou dix fois supérieure A2.

Une plus grande valeur de L permet d'obtenir une pente initiale $di/dt = U_0/L$ plus faible, mais présente l'inconvénient d'engendrer une augmentation de l'énergie magnétique stockée $W_{mag} = 1/2 \, .L.i^2$ dans le même rapport.

L'intensité instantanée $i(t)$ du courant d'appel tend vers $U_0/R$ pour des instants plus grands que la constante de temps électrique nominale $\tau$, c'est-à-dire vers une limite qui dépend de toutes les résistances R du circuit électrique de puissance 1, et n'est donc pas, de ce fait, facilement réglable.

Des solutions (3) de l'équation différentielle (1) correspondant au cas du rotor libre de tourner sont représentées sur la **Figure 2b** quand la valeur de L passe de $L_0$ (pas de bobine de choc 5 dans le circuit 1, à la valeur cinq fois supérieure A1, ou dix fois supérieure A2.

Le contrôle de la pente initiale $di/dt$ par l'accroissement de la valeur de L présente le même inconvénient de l'augmentation de l'énergie magnétique stockée $W_{mag}$ que précédemment.

Une valeur maximale $i_{max}$ de l'intensité instantanée dépend également dans ce cas de conditions extérieures sans possibilité de réglage, comme le montrent les relations (5) ci-dessus.

Cette valeur maximale $i_{max}$ dépend en effet de la fém de rotation $E(\Omega)$ du moteur 7 qui est fonction du produit des paramètres caractéristiques du moteur 7 (constante de fém $K_E$, constante de couple $K_C$ et flux inducteur $\Phi$).

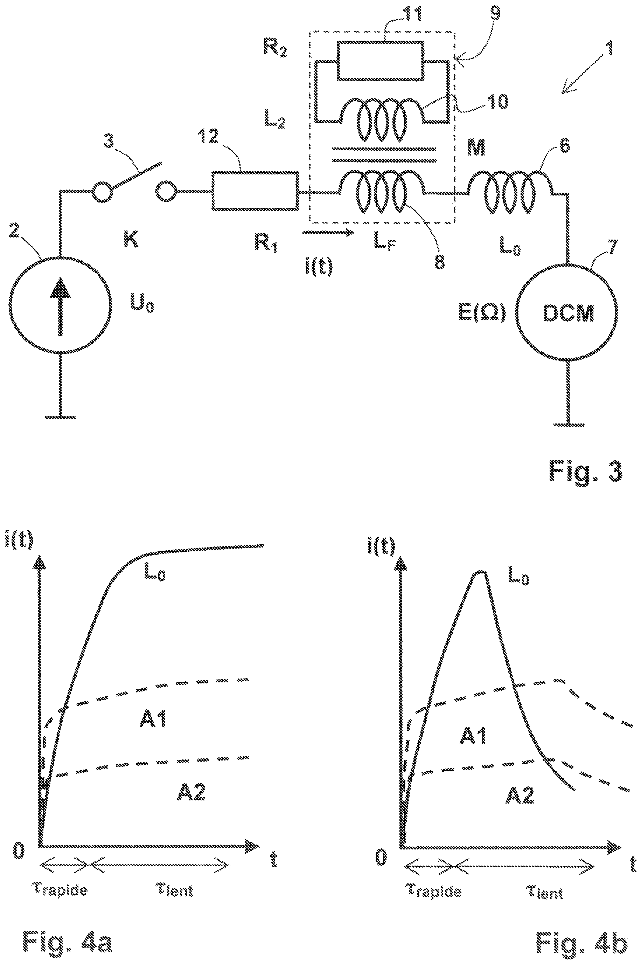

Dans le procédé de limitation d'un courant d'appel selon l'invention une valeur initiale de la vitesse de variation d'un courant d'appel et une limitation de ce courant d'appel peuvent au contraire être réglées indépendamment de ces conditions extérieures comme il sera montré ci-après en liaison avec la **Figure 3.**

Le circuit électrique de puissance 1 apte à la mise en oeuvre du procédé selon l'invention, montré schématiquement sur la **Figure 3,** comprend en série un élément inductif 8 qui permet:

- de rendre l'établissement initial du courant d'appel aussi rapide que l'on veut indépendamment des autres composants du circuit 1;
- de rendre l'établissement ultérieur du courant d'appel aussi lent que l'on veut ;
- de ne pas contribuer à emmagasiner une énergie magnétique supplémentaire; et
- de régler ainsi la limitation du courant d'appel.

Cet élément inductif 8 est constitué d'un enroulement primaire 8 d'un transformateur 9 dont un enroulement secondaire 10 est court-circuité sur sa propre résistance 11.

Les autres composants représentés sur la **Figure 3** sont identiques ou analogues à ceux de la **Figure 1:**

- la source de tension continue 2 ayant une tension nominale $U_0$ représentant la batterie de bord;
- l'interrupteur 3 représentant un contacteur électromagnétique;
- une résistance 12 représentant toutes les résistances du circuit, y compris la résistance primaire de l'enroulement primaire 8 du transformateur 9, et présentant une résistance totale R1;
- la self 6 représentant tous les enroulements du moteur 7 et présentant l'inductance nominale $L_0$;
- le moteur à courant continu 7 présentant la fém de rotation $E(\Omega)$ dépendant de la vitesse de rotation $\Omega$.

Le transformateur 9 est un transformateur de bonne qualité, c'est-à-dire qu'il est choisi pour présenter un coefficient de couplage magnétique k voisin de l'unité.

On rappelle que le coefficient de couplage d'un transformateur est défini par le rapport $k = M/(L_1.L_2)^{1/2}$, où $L_1$ est l'inductance primaire, $L_2$ l'inductance secondaire et M une inductance mutuelle. On définit le coefficient de dispersion d'un transformateur par la quantité $\sigma = 1 - k^2$.

Aux fins d'une seconde l'analyse électrique précise de ce circuit réalisée par l'entité inventive, on considère que $L_1$ est une somme de l'inductance nominale $L_0$ et de l'inductance de filtrage $L_F$ de l'enroulement primaire 8 du transformateur 9.

De la sorte $L_0$ apparaît comme une inductance de fuite du transformateur 9 ramenée au primaire, et la simplification de calcul est licite à condition de considérer un coefficient de couplage k plus faible.

C'est-à-dire que M est sensiblement égal à $0.9.(L_1.L_2)^{1/2}$ si $M_F$ est sensiblement égal à $1.0.(L_F.L_2)^{1/2}$.

Une première intensité du courant d'appel circulant dans le circuit électrique de puissance 1 est notée $i_1(t)$ et la tension instantanée aux bornes de la résistance 12, de l'enroulement primaire 8 et des enroulements moteurs 6 en série est notée U(t).

Une seconde intensité d'un courant secondaire circulant dans l'enroulement secondaire 10 du transformateur 9 est notée $i_2(t)$.

La constante de fém est notée $K_E$, la constante de couple est notée $K_C$, le moment d'inertie des pièces en rotation est noté J, le couple moteur est noté C, le flux inducteur est noté $\Phi$, les flux magnétiques totalisés à travers les enroulements primaire et secondaire 8, 10 sont notés respectivement $\Phi_1$ et $\Phi_2$, l'énergie magnétique additionnelle stockée dans le transformateur 9 est notée $W_{mag.add}$, celle stockée dans les enroulements moteurs est notée $W_{mag}$.

Cette seconde analyse électrique est résumée ci-dessous, sachant qu'elle se situe dans la cadre d'un fonctionnement linéaire, c'est-à-dire, sans saturation magnétique :

$$(1') \quad U = L_1.di_1/dt + M.di_2/dt + R_1.i_1, \text{ avec } i_1 = 0 \text{ à } t = 0$$

$$0 = L_2.di_2/dt + M.di_1/dt + R_2.i_2, \text{ avec } i_2 = 0 \text{ à } t = 0$$

(loi d'Ohm généralisée appliquée aux deux circuits électriques couplés)

$$(2') \quad i_1(t) = U_0/R_1 . (1 - \exp(-t/\tau_{rapide}).B_{rapide} - \exp(-t/\tau_{lent}).B_{lent}), \text{ avec } (B_{rapide} + B_{lent}) = 1$$

$$i_2(t) = U_0/R_2 . (0 - \exp(-t/\tau_{rapide}).C_{rapide} - \exp(-t/\tau_{lent}).C_{lent}), \text{ avec } C_{rapide} \text{ et } C_{lent} \text{ non}$$

explicités ici

$$B_{rapide} = 1/2 . (A^{½} + R_1.L_2 - R_2.L_1).A^{-½}$$

$$B_{lent} = 1/2 . (A^{½} - R_1.L_2 + R_2.L_1).A^{-½}$$

$$\tau_{rapide} = 2.(L_1.L_2 - M^2) / (R_1.L_2 + R_2.L_1 + A^{½})$$

$$\tau_{lent} = 2.(L_1.L_2 - M^2) / (R_1.L_2 + R_2.L_1 - A^{1/2})$$

avec $A = (R_1.R_2)^2.(L_1/R_1 - L_2/R_2)^2 + 4.R_1.R_2.M^2$ (solution du système différentiel (1') sans fém de rotation, rotor bloqué, avec $U = U_0$)

(3') idem à (2') mais avec $U = U_0 - E$ à la place de $U_0$
(solution approchée de (1') avec fém de rotation, à rotor libre de tourner, avec $U = U_0 - E(\Omega)$, $E(\Omega) = K_E.\Phi.\Omega$, et $J.d\Omega/dt = C(i) = K_C.\Phi.i$, d'où $\Omega = K_C.\Phi.i.t/J$)

$$(4') \quad \tau_{rapide}, \tau_{lent}, \text{ et } di_1/dt = U_0.L_2/(L_1.L_2 - M^2) \text{ à } t = 0, \text{ et } i_1 \rightarrow U_0/R_1 \text{ quand } t \rightarrow \infty$$

(extensions de (2') et de (1') sans fém de rotation: constantes de temps électriques, pente de la première intensité $i_1$ (t) à l'origine, et niveau asymptotique de $i_1$)

$$(5') \quad \tau_{rapide}, \tau_{lent}, \text{ et } di_1/dt \text{ à } t = 0 : \text{idem au cas (4'),}$$

et $di/dt = 0$ ($i_1 = i_{max}$) pour $U_0 - E(\Omega) = R_1.i_1$
(extensions de (3') et de (1') avec fém de rotation: constantes de temps électriques, pente du signal $i_1(t)$ à l'origine, et condition d'atteinte du niveau maximal $i_{max}$ de $i_1$)

$$(6') \quad W_{mag.add} = 1/2 . (i_1. \Phi_1 + i_2. \Phi_2)$$

Les enroulements primaires et secondaires (en considérant qu'ils sont bobinés dans le même sens) sont parcourus par des courants de sens opposés, puisque $i_1$ et $i_2$ sont respectivement inducteur et induit, et il en résulte que l'énergie magnétique additionnelle est quasi nulle:

$$W_{mag.add} \sim 1/2 . (i_1. \Phi_1 - i_1. \Phi_1) \sim 0$$

si le coefficient de couplage magnétique k est suffisamment proche de 1 (ce qui est le cas ici où $\Phi_1$ et $\Phi_2$ sont sensiblement égaux à un flux magnétique commun donné par le produit d'une induction magnétique B et d'une section fer d'un noyau magnétique traversé par ladite induction),

L'énergie magnétique totale $W_{mag.totale} = W_{mag.add} + W_{mag.}$ est donc sensiblement égale à celle stockée dans les enroulements moteurs 6, c'est-à-dire $W_{mag.totale} \sim 1/2 . (i_1. \Phi) \sim 1/2 . L_0. i_1^2$ comme en l'absence de tout élément inductif 8 supplémentaire dans le circuit de puissance (pas de dégradation en termes de niveau de risque de surtension sur le réseau de bord à l'ouverture du circuit électrique de puissance).

Des solutions (2') du système d'équations différentielles (1') correspondant au cas du rotor bloqué sont représentées sur la **Figure 4a** quand une valeur de $L_1$ a une valeur A1 cinq fois supérieure à $L_0$, ou une autre valeur A2 dix fois supérieure.

On constate que la pente $di_1/dt$ à l'instant initial t=0 varie peu en fonction de $L_1$, c'est-à-dire que la valeur initiale de la vitesse de variation du courant d'appel dans le circuit électrique de puissance 1 est sensiblement indépendante de l'inductance nominale $L_0$ des enroulements moteurs 6.

Cette valeur initiale peut être rendue très grande pour permettre un établissement rapide du courant d'appel en utilisant un transformateur de bonne qualité comme le montre l'expression $di_1/dt = U_0.L_2/(L_1.L_2 - M^2)$ de la pente initiale de $i_1(t)$. Quand le coefficient de couplage k tend vers 1, l'inductance mutuelle M tend vers $(L_1.L_2)^{1/2}$ et $di_1/dt$ tend vers l'infini.

La même expression montre que cette valeur initiale est proportionnelle au terme $1/(1 - k^2)$, c'est-à-dire est inversement proportionnel au coefficient de dispersion $\sigma$ du transformateur 9.

L'étude du cas où le rotor est en rotation conduit à un résultat identique **(Figure 4 b).**

Dans l'un et l'autre cas, un premier régime transitoire est gouverné par une première constante de temps électrique $\tau_{rapide}$ (dont l'expression est donnée ci-dessus) qui peut est rendue de préférence très inférieure à la constante de temps électrique nominale $\tau$ du circuit électrique de puissance 1 comprenant un élément inductif 5 connu de l'état de la technique, si le coefficient de couplage du transformateur 9 est suffisamment proche de l'unité.

Après ce premier régime transitoire, un second régime transitoire est gouverné par une seconde constante de temps électrique $\tau_{lent}$ (dont l'expression est donnée ci-dessus) qui, au contraire de la précédente, est avantageusement rendue très supérieure à la constante de temps électrique nominale $\tau$.

Dans ce second régime transitoire, la première intensité $i_1(t)$ diffère peu du niveau asymptotique du premier régime transitoire, c'est-à-dire qu'elle est fort avantageusement réglée en limitation de courant au moyen de la résistance secondaire $R_2$ de l'enroulement secondaire 10 du transformateur 9, avant que la pente $di_1/dt$ ne devienne négative sous l'effet de la mise en rotation du moteur 7.

Le rôle de la résistance totale $R_1$ est limité à définir le niveau de court-circuit final $U_0/R_1$, identique à la valeur $U_0/R$ du circuit électrique de puissance 1 comprenant une bobine de choc 5, mais jamais atteint, ni même approché, grâce à la fém de rotation $E(\Omega)$.

Dans le procédé de limitation d'un courant d'appel selon l'invention, la valeur initiale de la vitesse de variation du courant d'appel ($di_1/dt$ à $t = 0$) est donc plus élevée que dans les procédés connus de l'état de la technique consistant à ajouter une bobine de choc 5 dans le circuit électrique de puissance 1.

En outre, la limitation du courant d'appel est obtenue indépendamment des conditions extérieures aux caractéristiques du transformateur 9 utilisé, c'est-à-dire indépendamment notamment de la fém en rotation $E(\Omega)$ du moteur 7.

Grâce au procédé selon l'invention, cette limitation du courant d'appel ne se traduit pas par un niveau supérieur d'énergie magnétique stockée qui se manifesterait par l'apparition d'une surtension importante sur le réseau électrique de bord à l'ouverture du circuit.

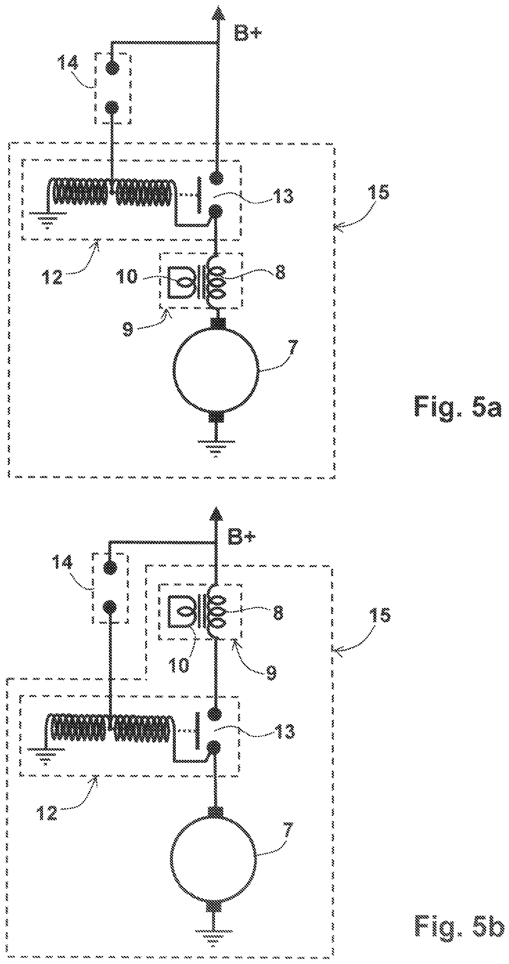

Les **Figures 5a et 5b** montrent deux applications pratiques du schéma théorique présenté sur la **Figure 3.**

Dans ces deux applications, le circuit électrique de puissance 1 comprend un contacteur électromagnétique 12 destiné à mettre sous tension le moteur électrique 7 à partir de la batterie de bord B+.

Dans un premier mode de réalisation, l'enroulement primaire 8 du transformateur 9, dont l'enroulement secondaire 10 est court-circuité, est monté en série entre le contacteur électromagnétique 12 et le moteur 7 (**Figure 5a**).

Dans un second mode de réalisation, l'enroulement primaire 8 du transformateur 9 est monté en série entre la batterie de bord B+ et le contacteur électromagnétique 12 (**Figure 5b**).

Le contacteur électromagnétique 12 est ici un contacteur classique de démarreur, à simple contact de puissance 13, et comprend un solénoïde formé d'une bobine d'appel et d'une bobine de maintien.

La fermeture d'un contact de démarrage 14 du véhicule commande l'excitation des bobines d'appel et de maintien, et l'activation du moteur 7 selon un séquencement bien connu de l'homme du métier et qui ne sera pas détaillé ici.

Le fort pic initial du courant d'appel mentionné plus haut intervient à la fermeture du contact de puissance 13, lorsque le moteur 7 est alimenté à pleine puissance.

Ce pic initial est contrôlé par le transformateur 9 qui est réalisé de préférence sous la forme d'un transformateur de type cuirassé ayant des enroulements couplés magnétiquement.

Différentes formes de réalisation permettent d'optimiser les inductances primaire et secondaire $L_F$, $L_2$, le coefficient d'inductance mutuelle M, et la résistance secondaire $R_2$ en fonction d'un gabarit de tension à respecter sur le réseau électrique de bord B+ au moment de l'activation du moteur 7.

Typiquement, l'inductance primaire $L_F$ du transformateur 9 est comprise entre 0,1 et 10 mH environ pour des courants d'appel ayant un ordre de grandeur de 300 à 1000 A.

Le limiteur de courant, constitué par le transformateur 9, est un composant qui est réalisé avantageusement sous la forme d'une carcasse cylindrique en matériau magnétique tel que l'acier, contenant les enroulements primaire 8 et secondaire 10..

Cette carcasse est de préférence fixée sur le carter extérieur du moteur 7, à proximité du contacteur électromagnétique 12, pour constituer un ensemble compact 15 de démarreur de véhicule automobile.

Comme il va de soi, l'invention ne se limite pas aux seuls modes d'exécution préférentiels décrits ci-dessus.

**Revendications**

1.  Procédé de limitation d'un courant d'appel dans un circuit électrique de puissance (1) d'un démarreur de véhicule automobile, ledit démarreur (15) comprenant un contacteur électromagnétique (12) et un moteur électrique (7) comportant des enroulements moteurs (6) présentant une inductance nominale ($L_0$), du type de ceux consistant à contrôler la vitesse de variation dudit courant d'appel au moyen d'un élément inductif (5,8) inséré en série dans ledit circuit (1), **caractérisé en ce qu'**une valeur initiale de ladite vitesse de variation est fonction d'un coefficient de couplage voisin de un entre un enroulement primaire (8) et un enroulement secondaire (10) d'un transformateur (9) dont ledit enroulement primaire (8) constitue ledit élément inductif, de sorte que ladite valeur initiale de ladite vitesse de variation soit sensiblement indépendante de ladite inductance nominale ($L_0$), ladite valeur initiale étant inversement proportionnelle à un coefficient de dispersion dudit transformateur.

**2.** Procédé de limitation d'un courant d'appel dans un circuit électrique de puissance (1) d'un démarreur de véhicule automobile selon la revendication 1, **caractérisé en ce qu'**une limitation dudit courant d'appel est fonction d'une résistance secondaire ($R_2$) dudit enroulement secondaire (10).

**3.** Circuit électrique de puissance (1) d'un démarreur d'un véhicule automobile, ledit démarreur (15) comprenant un moteur électrique (7) et un contacteur électromagnétique (12), du type de ceux comprenant en série un élément inductif (5,8), et apte à la mise en oeuvre du procédé selon l'une quelconque des revendications 1 à 2 précédentes, **caractérisé en ce que** ledit élément inductif (5, 8) est constitué d'un enroulement primaire (8) d'un transformateur (9) dont un enroulement secondaire (10) est court-circuité.

**4.** Circuit électrique de puissance (1) d'un démarreur d'un véhicule automobile selon la revendication 3, **caractérisé en ce que** ledit enroulement primaire (8) est inséré entre une borne positive (B+) d'une batterie dudit véhicule et un contact de puissance (13) dudit contacteur électromagnétique (12).

**5.** Circuit électrique de puissance (1) d'un démarreur d'un véhicule automobile selon la revendication 3, **caractérisé en ce que** ledit enroulement primaire (8) est inséré entre un contact de puissance (13) dudit contacteur électromagnétique (12) et ledit moteur électrique (7).

**6.** Système comprenant un démarreur et un circuit électrique de puissance (1) de démarreur d'un véhicule automobile selon l'une quelconque des revendications 3 à 5, **caractérisé en ce qu'**il comprend un limiteur de courant qui est fixé sur un carter extérieur dudit démarreur (15) et formé par ledit transformateur (9) dont un enroulement secondaire (10) est court-circuité, ledit transformateur (9) présentant un coefficient de dispersion prédéterminé en fonction d'un gabarit de tension d'un réseau électrique de bord dudit véhicule.

**Patentansprüche**

**1.** Verfahren zur Begrenzung eines Einschaltstroms in einer elektrischen Leistungsschaltung (1) eines Kraftfahrzeuganlassers, der Anlasser (15) umfassend ein elektromagnetisches Schütz (12) und einen Elektromotor (7), der Motorwicklungen (6) aufweist, die eine Nenninduktanz ($L_0$) aufweisen, des Typs derjenigen, die darin bestehen, die Änderungsrate des Einschaltstroms mittels eines induktiven Elements (5, 8) zu steuern, das in Reihe in die Schaltung (1) geschaltet ist, **dadurch gekennzeichnet, dass** ein Anfangswert der Änderungsrate von einem Kopplungskoeffizienten nahe eins zwischen einer Primärwicklung (8) und einer Sekundärwicklung (10) eines Transformators (9) abhängig ist, dessen Primärwicklung (8) das induktive Element bildet, damit der Anfangswert der Änderungsrate im Wesentlichen unabhängig von der Nenninduktanz ($L_0$) ist, wobei der Anfangswert zu einem Streukoeffizienten des Transformators umgekehrt proportional ist.

**2.** Verfahren zur Begrenzung eines Einschaltstroms in einer elektrischen Leistungsschaltung (1) eines Kraftfahrzeuganlassers nach Anspruch 1, **dadurch gekennzeichnet, dass** eine Begrenzung des Einschaltstroms von einem Sekundärwiderstand ($R_2$) der Sekundärwicklung (10) abhängig ist.

**3.** Leistungsschaltung (1) eines Anlassers eines Kraftfahrzeugs, der Anlasser (15) umfassend einen Elektromotor (7) und ein elektromagnetisches Schütz (12), des Typs derjenigen, die ein induktives Element (5, 8) in Reihe umfassen und für die Umsetzung des Verfahrens nach einem der vorhergehenden Ansprüche 1 bis 2 geeignet ist, **dadurch gekennzeichnet, dass** das induktive Element (5, 8) von einer Primärwicklung (8) eines Transformators (9) gebildet ist, von dem eine Sekundärwicklung (10) kurzgeschlossen ist.

**4.** Leistungsschaltung (1) eines Anlassers eines Kraftfahrzeugs nach Anspruch 3,
**dadurch gekennzeichnet, dass** die Primärwicklung (8) zwischen einem positiven Anschluss (B+) einer Batterie des Fahrzeugs und einem Leistungskontakt (13) des elektromagnetischen Schützes (12) eingefügt ist.

**5.** Leistungsschaltung (1) eines Anlassers eines Kraftfahrzeugs nach Anspruch 3,
**dadurch gekennzeichnet, dass** die Primärwicklung (8) zwischen einem Leistungskontakt (13) des elektromagnetischen Schützes (12) und dem Elektromotor (7) eingefügt ist.

**6.** System umfassend einen Anlasser und eine elektrische Leistungsschaltung (1) eines Anlassers eines Kraftfahrzeugs nach einem der Ansprüche 3 bis 5, **dadurch gekennzeichnet, dass** es einen Strombegrenzer umfasst, der auf einem Außengehäuse des Anlassers (15) befestigt ist und von dem Transformator (9) gebildet ist, von dem eine Sekundärwicklung (10) kurzgeschlossen ist, wobei der Transformator (9) einen Streukoeffizienten aufweist, der in Abhängigkeit von einem Spannungsbereich eines elektrischen Bordnetzes des Fahrzeugs vorbestimmt ist.

**Claims**

1. Method for limiting an inrush current in an electric power circuit (1) of a motor vehicle starter, said starter (15) comprising an electromagnetic contactor (12) and an electric motor (7) including motor windings (6) having a nominal inductance ($L_0$), of the type consisting in controlling the rate of variation of said inrush current by way of an inductive element (5, 8) inserted in series in said circuit (1), **characterized in that** an initial value of said rate of variation is dependent on a coefficient of coupling of close to one between a primary winding (8) and a secondary winding (10) of a transformer (9) of which said primary winding (8) forms said inductive element, such that said initial value of said rate of variation is substantially independent of said nominal inductance ($L_0$), said initial value being inversely proportional to a coefficient of dispersion of said transformer.

2. Method for limiting an inrush current in an electric power circuit (1) of a motor vehicle starter according to Claim 1, **characterized in that** a limitation of said inrush current is dependent on a secondary resistance ($R_2$) of said secondary winding (10).

3. Electric power circuit (1) of a starter of a motor vehicle, said starter (15) comprising an electric motor (7) and an electromagnetic contactor (12), of the type comprising, in series, an inductive element (5, 8), and able to implement the method according to either one of preceding Claims 1 and 2, **characterized in that** said inductive element (5, 8) is formed of a primary winding (8) of a transformer (9) of which a secondary winding (10) is short-circuited.

4. Electric power circuit (1) of a starter of a motor vehicle according to Claim 3, **characterized in that** said primary winding (8) is inserted between a positive terminal (B+) of a battery of said vehicle and a power contact (13) of said electromagnetic contactor (12).

5. Electric power circuit (1) of a starter of a motor vehicle according to Claim 3, **characterized in that** said primary winding (8) is inserted between a power contact (13) of said electromagnetic contactor (12) and said electric motor (7).

6. System comprising a starter and an electric power circuit (1) of a starter of a motor vehicle according to any one of Claims 3 to 5, **characterized in that** it comprises a current limiter that is attached to an outer housing of said starter (15) and formed by said transformer (9) of which a secondary winding (10) is short-circuited, said transformer (9) having a coefficient of dispersion that is predetermined on the basis of a voltage limit of an on-board electrical network of said vehicle.

Fig. 1

Fig. 2a

Fig. 2b

Fig. 3

Fig. 4a

Fig. 4b

Fig. 5a

Fig. 5b

**RÉFÉRENCES CITÉES DANS LA DESCRIPTION**

**Documents brevets cités dans la description**

- US 20020023605 A1
- EP 2080897 A2
- EP 2128426 A2
- US 6598574 B2
- US 1179407 A